# FASCICULE DE BREVET EUROPEEN

(11) **EP 3 934 851 B1**
(45) Date de publication et mention de la délivrance du brevet: **26.07.2023**
(21) Numéro de dépôt: 20725835.1
(22) Date de dépôt: 05.03.2020
(51) Int. Cl.: B25F 5/00, B25H 7/00

(54) **SYSTÉME DE MARQUAGE PAR MICROPERCUSSION À COMMUNICATION SANS FIL AVEC GESTION CENTRALISÉE, ET PROCÉDÉ ASSOCIÉ**
SYSTEM ZUR MARKIERUNG DURCH MIKRO-PERKUSSION MIT DRAHTLOSER KOMMUNIKATION UND ZENTRALISIERTER VERWALTUNG UND ZUGEHÖRIGES VERFAHREN
MICROPERCUSSION MARKING SYSTEM WITH WIRELESS COMMUNICATION AND CENTRALIZED OPERATION, AND ASSOCIATED PROCESS

(30) Priorité: 05.03.2019 FR 1902255
(43) Date de publication de la demande: 12.01.2022
(73) Titulaire: Technomark International, 42350 La Talaudiere (FR)
(72) Inventeur: BAUD, Laurent Albert Paul, 75011 Paris (FR); JACOB, Stéphane Noel, 42800 Genilac (FR)
(74) Mandataire: Weber, Jean-François
(86) Numéro de dépôt international: PCT/FR2020/050449
(87) Numéro de publication internationale: WO 2020/178530

(56) Documents cités:
- FR-A1- 3 029 443
- US-A1- 2018 071 907

## Description

### DOMAINE TECHNIQUE

La présente invention concerne le domaine général du marquage à micropercussion, et plus précisément la réalisation de marquage à micropercussion afin d'inscrire un ou plusieurs signes sur un composant, par exemple un composant industriel.

Plus particulièrement, l'invention concerne un système de marquage.

L'invention concerne également un procédé de marquage associé.

### TECHNIQUE ANTERIEURE

Traditionnellement, le marquage par micropercussion est réalisé à l'aide de systèmes de marquage comprenant des machines de marquage fixes près desquelles des pièces à marquer sont amenées. Ces machines fixes sont généralement reliées chacune à un moyen de commande fixe respectif grâce auquel un utilisateur peut entrer des données de marquage respectives manuellement ou faire appel à une base de données respective contenant des données de marquage respectives pour la machine. Il est également connu de mettre en oeuvre des machines fixes similaires mais avec un boîtier de commande manuelle monté directement sur la machine, l'utilisateur pouvant entrer des données du marquage à réaliser par la machine via le boîtier à proximité de cette dernière.

Il est en outre connu de mettre en oeuvre des systèmes de marquage comprenant des machines de marquage par micropercussion portatives qui sont conçues pour être transportées manuellement, par un utilisateur, jusqu'à une pièce à marquer, et qui sont munies chacune d'un câble de puissance respectif pour d'une part relier la machine portative à une source d'énergie respective pour l'alimentation de cette dernière et d'autre part relier la machine à un boîtier de commande fixe respectif pour entrer des données de marquage respectives.

Il est également connu de mettre en oeuvre un système de marquage avec un boîtier de commande embarqué sur une machine de marquage portative pourvue d'une alimentation par batterie, pour entrer manuellement via le boîtier embarqué des données de marquage et s'affranchir de l'ordinateur et du câble de puissance.

FR 3 029 443 A1 divulgue un système de marquage comprenant une machine de marquage par micropercussion et un procédé de marquage comprenant une étape de positionnement d'une machine de marquage par micropercussion.

Ces systèmes dédiés au marquage par micropercussion, bien que donnant globalement satisfaction dans leur utilisation, n'en présentent pas moins certains inconvénients.

Ainsi, ces systèmes de marquage par micropercussion connus présentent des limitations importantes en termes d'interfaçage non seulement entre les moyens ou boîtiers de commande d'une part et leurs machines associées d'autre part, mais également entre les différentes machines en fonctionnement elles-mêmes. Par exemple, il est particulièrement difficile de mettre en oeuvre plusieurs machines de marquage connues devant fonctionner en même temps pour marquer différentes pièces avec des signes distincts à la fois sans risque d'erreur, notamment une répétition non voulue de numéros de série, et avec un rendement satisfaisant, c'est-à-dire à une vitesse de marquage élevée.

Les systèmes de marquage connus présentent de plus un faible niveau d'interopérabilité, et il est nécessaire de paramétrer chaque machine selon son propre système de commande, ce qui nécessite de recourir à de nombreux opérateurs spécialisés qualifiés et multiplie le risque d'erreur.

Ainsi, même si des systèmes de marquage sont connus et réalisables en tant que tels, les inconvénients mentionnés ci-avant démontrent qu'ils ne sont pas adaptés à une mise en oeuvre simple, efficiente et modulable de différentes opérations de marquage à l'échelle industrielle.

En définitive, les systèmes de marquage par micropercussion connus sont particulièrement coûteux, complexes et longs à régler entre chaque marquage, et présentent en outre un risque élevé d'erreur de marquage. Ils demandent de plus de mobiliser une main d'oeuvre qualifiée nombreuse. Enfin, les systèmes de marquage par micropercussion connus sont difficilement utilisables en combinaison les uns avec les autres.

### EXPOSE DE L'INVENTION

Les objets assignés à la présente invention visent en conséquence à remédier aux différents inconvénients énumérés précédemment et à proposer un nouveau système de marquage qui, tout en étant particulièrement efficient, est particulièrement simple à mettre en œuvre, peu coûteux et modulable à volonté.

Un autre objet de l'invention vise à proposer un nouveau système de marquage dont le fonctionnement est particulièrement facile à adapter à une pluralité de machines de marquage du même type ou de différents types.

Un autre objet de l'invention vise à proposer un nouveau système de marquage capable de marquer efficacement par micropercussion une grande quantité de composants avec un risque d'erreur de marquage extrêmement faible, et ce même dans un cours laps de temps.

Un autre objet de l'invention vise à proposer un nouveau système de marquage à la fois fiable et compétitif sur le plan économique.

Un autre objet de l'invention vise à proposer un nouveau système de marquage particulièrement adapté aux grandes cadences de marquage.

Un autre objet de l'invention vise à proposer un nouveau système de marquage dont la conception lui assure un fonctionnement particulièrement flexible et facile à faire évoluer selon les besoins des utilisateurs.

Un autre objet de l'invention vise à proposer un nouveau système de marquage présentant un rendement optimisé, permettant ainsi le recours à un dimensionnement au plus juste des éléments contribuant au marquage.

Un autre objet de l'invention vise à proposer un nouveau système de marquage nécessitant peu d'entretien et une main d'oeuvre réduite ou au moins une main d'oeuvre qualifiée réduite.

Un autre objet de l'invention vise à proposer un nouveau système de marquage particulièrement efficace et adapté pour le marquage de composants industriels.

Un autre objet de l'invention vise à proposer un nouveau système de marquage permettant d'optimiser la gestion de données de marquage, et notamment l'implémentation d'instructions de marquage, leur réalisation et leur suivi.

Un autre objet de l'invention vise à proposer un nouveau système de marquage particulièrement facile à installer au sein d'une structure ou installation industrielle en construction ou préexistante.

Un autre objet de l'invention vise à proposer un nouveau procédé de marquage facile à mettre en oeuvre, et qui permet d'obtenir une amélioration de la vitesse de marquage tout en garantissant une diminution significative du risque d'erreur de marquage.

Les objets assignés à l'invention sont atteints à l'aide d'un système de marquage selon la revendication 1 caractérisé en ce qu'il comprend :
- une pluralité de machines de marquage par micropercussion chacune équipée d'un dispositif de liaison sans fil respectif,
- une infrastructure de réseau informatique conçue pour générer une zone de connexion sans fil, dans laquelle chaque dispositif de liaison sans fil peut être positionné pour coopérer avec ladite infrastructure de manière à établir une connexion sans fil respective entre chacune desdites machines de marquage et ledit réseau,
- un dispositif de gestion centralisée de marquage relié à ladite infrastructure de réseau et destiné, via ledit réseau et lesdites connexions sans fil, à fournir auxdites machines de marquage des premières informations et/ou à recevoir desdites machines de marquage des secondes informations.

Les objets assignés à l'invention sont également atteints à l'aide d'un procédé de marquage selon la revendication 15 comprenant
- une étape de génération d'une zone de connexion sans fil,
- une étape de positionnement dans ladite zone de connexion sans fil d'une pluralité de machines de marquage par micropercussion chacune équipée d'un dispositif de liaison sans fil respectif,
- une étape de connexion dans laquelle chaque dispositif de liaison sans fil établit une connexion sans fil respective entre chacune desdites machines de marquage et un réseau informatique,
- une étape de transmission, dans laquelle un dispositif de gestion centralisée de marquage, via ledit réseau et lesdites connexions sans fil, fournit auxdites machines de marquage des premières informations et/ou reçoit desdites machines de marquage des secondes informations.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemples illustratifs et non limitatifs, dans lesquels :
Figure 1 est une illustration schématique simplifiée d'un système de marquage selon un premier mode de réalisation de l'invention.
Figure 2 est une illustration schématique simplifiée d'un système de marquage selon un deuxième mode de réalisation de l'invention.
Figure 3 est une illustration schématique simplifiée d'un système de marquage selon un troisième mode de réalisation de l'invention.
Figure 4 est une illustration schématique simplifiée d'un système de marquage selon un quatrième mode de réalisation de l'invention.

### MEILLEURE MANIERE DE REALISER L'INVENTION

Comme illustré aux figures, l'invention concerne, selon un premier aspect illustré aux figures, un système de marquage 1. Bien évidemment, le système de marquage 1 est destiné à marquer par micropercussion au moins une pièce à marquer, par exemple un composant ou un produit industriel, de manière à la déformer pour y inscrire au moins un signe qui est lui-même avantageusement destiné à fournir une identification pour distinguer ladite pièce marquée d'autre pièces également marquées (préférentiellement également grâce au même système 1), ou encore grouper plusieurs pièces entre elles portant le ou les mêmes signes. Le système de marquage 1 est ainsi conçu pour déformer plastiquement par micropercussion tout type de pièce à marquer appropriée, par exemple un composant en métal, en polymère, en bois, ou tout autre matériau approprié.

Selon l'invention, le système de marquage 1 comprend une pluralité de machines de marquage par micropercussion 2 chacune équipée d'un dispositif de liaison sans fil 3 respectif. Ainsi, chaque machine de marquage 2 embarque avantageusement au moins un dispositif de liaison sans fil 3 respectif, qui est par exemple de type radio et notamment de type Wi-Fi^{™} ou encore de type Bluetooth^{™} ou tout autre standard approprié (notamment selon l'une ou plusieurs des normes de téléphonie mobile telles que 2G, 3G, 4G, 5G, etc.). De préférence, le dispositif de liaison sans fil 3 est donc conçu pour réaliser une liaison non filaire, de préférence radio, entre la machine de marquage 1 qu'il équipe et un autre élément (qui sera détaillé ci-après). Le dispositif de liaison sans fil 3 peut être en particulier formé par un émetteur ou un récepteur respectif. Le dispositif de liaison sans fil 3 peut notamment être amovible, c'est-à-dire être désolidarisé de ladite machine de marquage 2, et il est de préférence intégré au sein de ladite machine de marquage 2 ou fixé sur celle-ci, ou encore intégré partiellement au sein de cette dernière. Optionnellement, le dispositif de liaison sans fil 3 peut également équiper un accessoire respectif de ladite machine de marquage 2 qui est destiné à être fixé à cette dernière, et donc à en faire partie intégrante, au moins pour le fonctionnement voulu de ladite machine de marquage 2, ledit accessoire étant par exemple amovible. Dans les figures, les dispositifs de liaison sans fil 3 sont intégrés au sein de leurs machines de marquage 2 respectives, et ne sont pas visibles depuis l'extérieur, mais ils pourraient tout aussi bien affleurer ou dépasser desdites machines de marquage 2 en étant visibles.

Chaque machine de marquage 2 comprend avantageusement une tête de marquage 4 respective munie d'un poinçon mobile 5 respectif, lequel est destiné à percuter une pièce à marquer respective de manière à déformer cette dernière pour y inscrire au moins un signe respectif, et éventuellement une pluralité de signes consécutifs, le ou les signes formant par exemple un ou des numéros de série, inscriptions, marques, logos, caractères alphanumériques, motifs ornementaux, symboles d'identification, marquages-codages matriciels en deux dimensions notamment de type Data Matrixe, etc.

L'invention concerne, selon un second aspect, un procédé de marquage, lequel est de préférence mis en oeuvre à l'aide du système de marquage 1 mentionné ci-avant, et décrit plus en détail ci-après. Ainsi, de façon préférentielle, la description qui suit concernant le système de marquage 1 s'applique donc également au procédé de marquage de l'invention, et inversement.

Le système de marquage 1 selon l'invention comprend en outre une infrastructure 6 de réseau informatique 7 conçue pour générer une zone de connexion sans fil, dans laquelle lesdites machines de marquage 2 peuvent être positionnées afin que leurs dispositifs de liaison sans fil 3 respectifs coopèrent avec ladite infrastructure 6 de manière à établir une connexion sans fil 8 respective entre chacune desdites machines de marquage 2 et ledit réseau 7. Ainsi, ladite infrastructure 6 permet avantageusement la réalisation d'un réseau informatique 7, par exemple de type intranet ou internet, ledit réseau informatique 7 reliant plusieurs éléments de ladite infrastructure 6 entre eux via des moyens de communication numériques filaires ou sans fil. Ledit réseau informatique 7 est représenté schématiquement aux figures par un globe, tandis que l'infrastructure 6 comprend de manière avantageuse au moins un élément solide de type « *hardware »* ou matériel informatique, par exemple un serveur. Chaque dispositif de liaison sans fil 3 permet donc de relier ladite machine de marquage 2, et plus particulièrement ladite tête de marquage 4, audit réseau informatique 7, via ladite connexion sans fil 8, lorsque ladite machine de marquage 2 est positionnée dans ladite zone de connexion.

De préférence, ladite infrastructure 6 de réseau 7 comprend au moins une borne de connexion sans fil (non illustrée) destinée à se connecter avec au moins l'un desdits dispositif de liaison 3 sans fil pour établir ladite connexion sans fil 8, au moins une partie de ladite zone se situant autour de ladite borne. Ladite borne de connexion sans fil permet avantageusement la connexion desdits dispositif de liaison 3 audit réseau 7, et constitue de préférence un *« hotspot »* ou point de connexion audit réseau 7. Ladite borne de connexion sans fil forme avantageusement un point de connexion radio audit réseau 7, par exemple via Wi-Fi^{™} ou autre standard approprié.

De façon avantageuse, ladite connexion sans fil 8 est une connexion radio, par exemple de type Wi-Fi^{™} ou éventuellement de type Bluetooth^{™}, ledit dispositif de connexion sans fil 3 étant donc conçu pour se connecter via liaison radio, par exemple Wi-Fi^{™} ou autre standard approprié, audit réseau 7.

Ladite infrastructure 6 peut éventuellement comprendre une pluralité de bornes similaires à celle mentionnée ci-avant et pour le même usage, lesdites bornes permettant de générer ensemble ladite zone de connexion, laquelle peut donc être relativement localisée ou au contraire très étendue.

Le procédé de marquage comprend selon l'invention une étape de génération d'une zone de connexion sans fil, de préférence à l'aide d'une infrastructure 6 de réseau informatique 7 telle sur mentionnée ci-avant et décrite plus en détail ci-après.

Également selon l'invention, le procédé de marquage comprend en outre, de préférence après ladite étape de génération, une étape de positionnement dans ladite zone de connexion sans fil d'une pluralité de machines de marquage par micropercussion 2 (de préférence telles que mentionnées ci-avant) chacune équipée d'un dispositif de liaison sans fil 3 respectif (de préférence tel que mentionné ci-avant).

Toujours selon l'invention, le procédé de marquage comprend, préférentiellement après ladite étape de positionnement, une étape de connexion dans laquelle chaque dispositif de liaison sans fil 3 établit une connexion sans fil 8 (de préférence telle que mentionnée ci-avant) respective entre chacune desdites machines de marquage 2 et un réseau informatique 7 (de préférence tel que mentionné ci-avant). De préférence, ladite étape de connexion comprend une étape de coopération dans laquelle chaque dispositif de liaison sans fil 3 coopère avec ladite infrastructure 6 pour établir lesdites connexions sans fil 8 respectives entre chacune desdites machine de marquage 2 et ledit réseau 7.

De préférence, le procédé de marquage comprend, avant ladite étape de connexion, une étape d'équipement dans laquelle lesdites machines de marquage par micropercussion 2 sont équipées chacune dudit dispositif de liaison sans fil 3 respectif.

Le système de marquage 1 selon l'invention comprend également un dispositif de gestion centralisée de marquage 9 relié à ladite infrastructure 6 de réseau 7 et destiné, via ledit réseau 7 et lesdites connexions sans fil 8, à fournir auxdites machines de marquage 2 des premières informations et/ou à recevoir desdites machines de marquage 2 des secondes informations. Ledit dispositif de gestion 9 est donc avantageusement conçu pour être relié à plusieurs desdites machines de marquage 2, et plus particulièrement à la tête de marquage 5 respective de chaque machine 2, pour donner et/ou recevoir de ladite pluralité de machines 2 des informations spécifiques à chaque machine 2, en l'occurrence lesdites premières et/ou secondes informations, et les traiter de manière centralisée. Il est donc possible, grâce au système de marquage 1 de l'invention, de gérer plusieurs machines de marquage 2 de même type ou de différents types avec une forte interopérabilité, grâce à la gestion centralisée desdites premières et/ou secondes informations, et un risque minimal d'erreur de marquage (telle qu'un doublon non désiré, un faux numéro, et/ou une manipulation erronée par un opérateur).

Selon l'invention, le procédé de marquage comprend une étape de transmission, dans laquelle un dispositif de gestion centralisée de marquage 9 (qui est de préférence tel que mentionné ci-avant et relié à ladite infrastructure 6 de réseau 7), via ledit réseau 7 et lesdites connexions sans fil 8, fournit auxdites machines de marquage 2 des premières informations et/ou reçoit desdites machines de marquage 2 des secondes informations.

De manière avantageuse, comme illustré aux figures, ladite infrastructure 6 de réseau 7 comprend au moins un serveur d'entreprise 10 par lequel passent et/ou sont traitées lesdites premières informations et/ou lesdites secondes informations.

Bien évidemment, ledit serveur d'entreprise 10 est avantageusement relié à ladite ou lesdites bornes de connexion, par liaison filaire ou sans fil, pour :
- transmettre lesdites premières informations à ladite ou auxdites bornes qui elles-mêmes les transmettront auxdites machines de marquage 2, et/ou
- recevoir, via ladite ou lesdites bornes, lesdites secondes informations en provenance desdites machines de marquage 2.

Ainsi, de manière avantageuse, ledit serveur d'entreprise 10 est relié à ladite borne et sert d'intermédiaire entre cette dernière et ledit dispositif de gestion centralisée de marquage 9.

Préférentiellement, lesdites premières informations comprennent des instructions de marquage distinctes pour chacune desdites machines de marquage 2. Plus particulièrement, le dispositif de gestion centralisée de marquage 9 est avantageusement conçu pour transmettre auxdites machines de marquage 2, via ledit réseau 7 et lesdites connexions sans fil 8, lesdites premières informations de manière spécifique (c'est-à-dire des informations distinctes relativement à chacune desdites autres machines de marquage 2). De façon avantageuse, le dispositif de gestion centralisée de marquage 9 est conçu pour gérer les différentes machines de marquage 2 en interdépendance les unes des autres, c'est-à-dire en particulier que les premières et/ou secondes informations émises et/ou reçues par ledit dispositif de gestion centralisée de marquage 9 vis-à-vis d'une desdites machines de marquage 2 dépendent des premières et/ou secondes informations émises et/ou reçues par ledit dispositif de gestion centralisée de marquage 9 vis-à-vis d'une autre desdites machines de marquage 2. Une telle configuration permet notamment au système 1 (et procédé de marquage associé) de marquer par micropercussion sans erreur de multiples composants industriels dans un intervalle de temps très court à l'aide de ladite pluralité de machines de marquage 2. Cette configuration est par ailleurs particulièrement adaptée pour le marquage par micropercussion d'objets, par exemple pour l'écriture de numéro de série générés automatiquement, de numéros de série préenregistrés, ou encore de numéros de lots (par exemple, chaque lot présentant un certain nombre de numéros identiques dans une limite qui ne doit impérativement pas être dépassée). Le dispositif de gestion centralisée de marquage 9 gère donc de préférence les machines de marquage 2 en interdépendance, mais il ne peut être qu'un relais centralisé par lequel passent lesdites premières et/ou secondes informations qui sont en pratique avantageusement traitées via ledit réseau 7, par exemple par l'interface utilisateur 11, le programme de gestion de production 14, et/ou encore le serveur dédié 15 qui seront détaillés ci-après.

Ainsi, de manière préférentielle, toutes les machines de marquage 2 placées dans ladite zone de connexion 8 et reliées audit réseau 7 peuvent recevoir dudit dispositif de gestion 9 ou envoyer à ce dernier des informations propres à chaque machine 2, lesdites informations propres étant formées :
- par lesdites premières informations lorsqu'elles sont émises par ledit dispositif de gestion centralisée 9 et reçues par lesdites machines de marquage 2, et
- par lesdites secondes informations lorsqu'elles sont émises par lesdites machines de marquage 2 et reçues par ledit dispositif de gestion centralisée 9.

Par exemple, ledit signe respectif est issu desdites premières informations, qui comprennent donc au moins des données de marquage, lesquelles incluent par exemple un ensemble de numéros de série à marquer par micropercussion sur différentes pièces à marquer.

Selon un autre exemple, compatible avec le précédent, lesdites premières informations comprennent des données de configuration desdites machines de marquage 2, incluant par exemple une taille de police, des données concernant le matériau à marquer, une instruction concernant la force de poinçonnage que le poinçon mobile 5 doit exercer, etc.

Selon encore un autre exemple, compatible avec les précédents, lesdites secondes informations sont des rapports d'état distincts de chacune desdites machines de marquage. L'un ou plusieurs desdits rapports d'état peut notamment comprendre :
- un nombre de cycles de marquage respectif effectué par l'une ou plusieurs desdites machines de marquage 2,
- et/ou une température de fonctionnement respective de l'une ou plusieurs desdites machines de marquage 2.

Selon encore un autre exemple, compatible avec les précédents, lesdits rapports d'état comprennent des données d'état desdites machines de marquage 2, lesdites données d'état pouvant être générées à des fins statistiques ou directement sous forme de statistiques, lesdites données d'état pouvant par ailleurs inclure tout type d'informations fonctionnelles relatives auxdites machines de marquage 2.

Selon un autre exemple encore, compatible avec les précédents, l'une ou plusieurs desdites machines de marquage 2 est/sont portative(s), comme illustré aux figures. Selon un autre exemple, éventuellement au moins en partie compatible avec les précédents, l'une ou plusieurs desdites machines de marquage 2 est/sont fixe(s), comme illustré aux figures. Ainsi, le système de marquage 1 de l'invention est avantageusement suffisamment modulable pour fonctionner aussi bien avec des machines de marquage 2 fixes que des machines de marquage 2 portables, ou une combinaison des deux, ces machines de marquage pouvant être de tout type du moment qu'elles sont chacune équipées d'un dispositif de liaison sans fil 3 et se trouvent dans ladite zone de connexion.

Selon encore un autre exemple, compatible avec les précédents, une ou plusieurs desdites machine(s) de marquage 2 portative(s) est/sont munies chacune d'une batterie respective garantissant son/leur autonomie. Par exemple, un ou plusieurs desdits rapports d'état comprend des données relatives au niveau de chargement de chaque batterie. Alternativement, ladite ou lesdites machine(s) de marquage 2 portative(s) est/sont munies chacune d'un câble de puissance respectif.

Chaque rapport d'état peut également comprendre d'autres types d'informations, par exemple une évaluation de la position spatiale de chaque machine de marquage 2, la distance entre ladite machine de marquage 2 et ladite borne de connexion sans fil, d'éventuels problèmes mécaniques, etc.

De préférence, ledit dispositif de gestion centralisée de marquage 9 comprend une interface utilisateur 11, par exemple un écran éventuellement relié à un ordinateur, ce dernier faisant éventuellement partie du dispositif de gestion centralisée de marquage 9 et/ou dudit serveur d'entreprise 10 et/ou de ladite infrastructure 6. Ladite infrastructure 6 et ledit dispositif de gestion centralisée de marquage 9 peuvent donc optionnellement comporter des éléments communs.

De façon avantageuse, ledit dispositif de gestion centralisée de marquage 9 comprend un programme de gestion 12 desdites premières et/ou secondes informations.

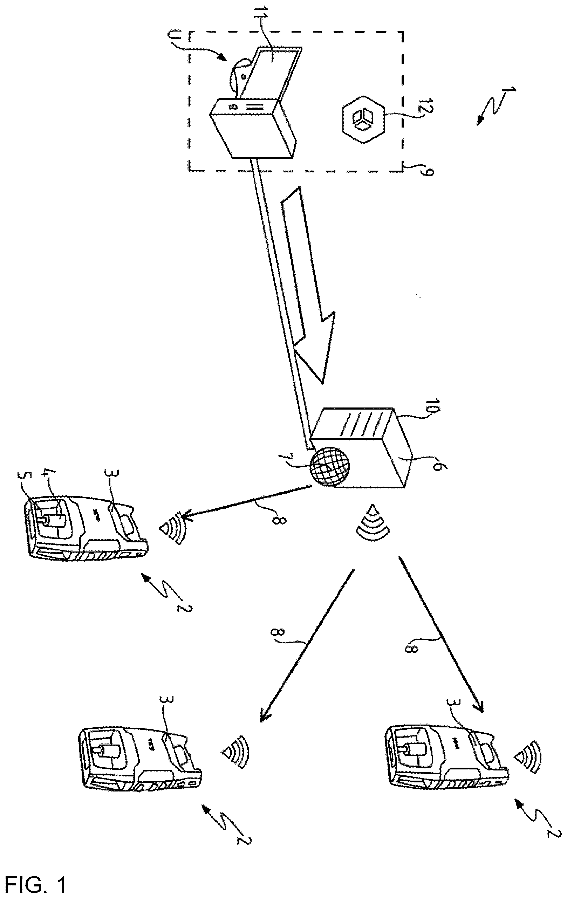

Selon un premier mode de réalisation, comme illustré à la figure 1, ladite interface utilisateur 11 est conçue pour permettre à un utilisateur U de rentrer manuellement lesdites premières informations et/ou lire lesdites secondes informations, par exemple à l'aide dudit programme de gestion 12 qui permet en particulier d'afficher, par exemple sur ledit écran, lesdites secondes informations, ou de renseigner manuellement lesdites premières informations (notamment à l'aide d'un clavier, d'un écran tactile, etc. faisant partie de l'interface utilisateur 11). Bien évidemment, ladite interface utilisateur 11 permet avantageusement d'afficher lesdites premières informations et/ou lesdites secondes informations. Dans ce dernier mode de réalisation, le programme de gestion 12 est avantageusement conçu au moins pour permettre la création de marquage manuellement par l'utilisateur.

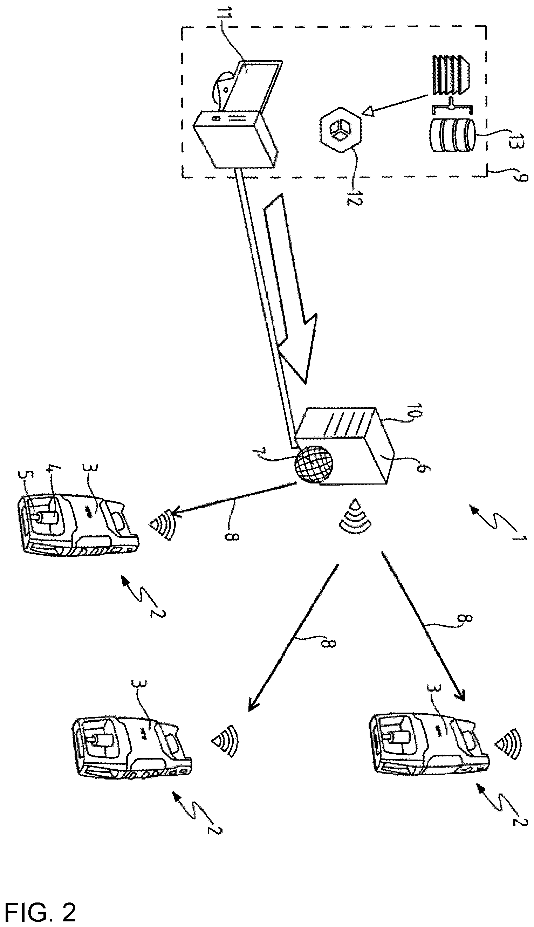

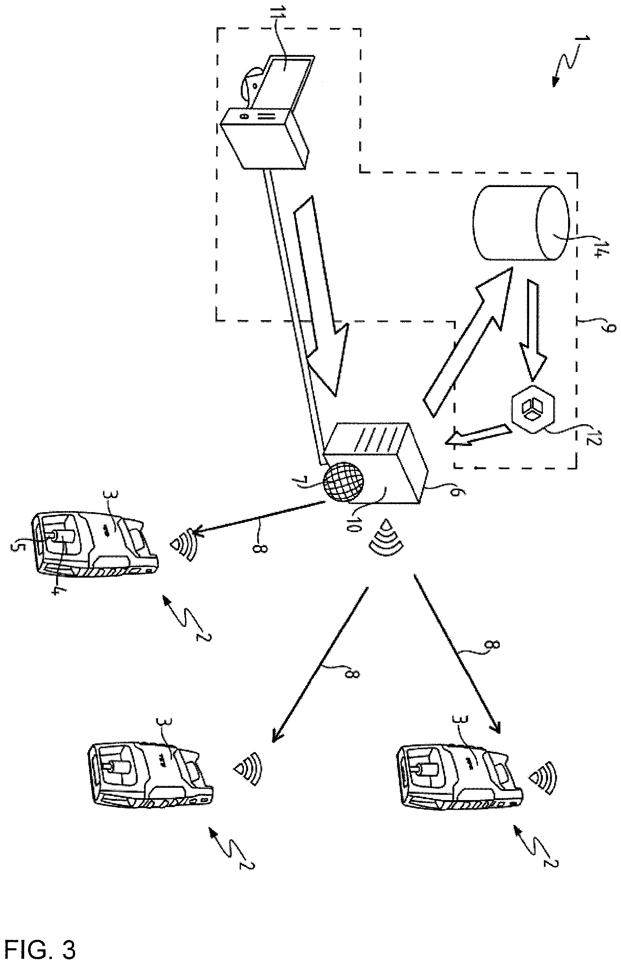

Selon un deuxième mode de réalisation, illustré aux figures 2 et 3 et compatible avec le premier mode, ledit dispositif de gestion centralisée de marquage 9 comprend en outre au moins une base de données 13 comprenant au moins en partie lesdites premières informations et/ou enregistrant au moins en partie lesdites secondes informations. Ce mode de réalisation est particulièrement avantageux lorsqu'un utilisateur U désire faire appel à ladite base de données 13, qui comprend par exemple un ou plusieurs fichiers de type texte ou Excel^{®}, et dans laquelle sont préalablement inscrites lesdites premières informations et/ou sont enregistrées au fur et à mesure lesdites secondes informations. En particulier, ladite base de données 13 est avantageusement gérée de manière automatique par ledit programme de gestion 12, de façon que ledit dispositif de gestion centralisée de marquage 9 envoie lesdites premières informations issues de ladite base de données 13 ou enregistre lesdites secondes informations dans ladite base de données 13, de manière automatique, c'est-à-dire de préférence sans intervention de l'utilisateur U autre qu'un ordre principal d'utilisation de ladite base de données 13. Alternativement, ou en combinaison avec ce qui précède, ladite base de données 13 est gérée de manière manuelle par l'utilisateur U via ledit programme de gestion 12, l'utilisateur U inscrivant par exemple lui-même des données dans ladite base de données (par exemple lesdites premières et/ou secondes informations), ou extrayant lui-même des données (par exemple lesdites premières et/ou secondes informations) dans ladite base de données 13.

Selon un troisième mode de réalisation, compatible avec les autres modes décrits précédemment, ledit dispositif de gestion centralisée de marquage 9 comprend en outre programme de gestion de production 14 destiné à fournir automatiquement lesdites premières informations. Avantageusement, ledit programme de gestion de production 14 est capable de réaliser en tout ou en partie ladite base de données 13.

De façon avantageuse, dans ce troisième mode de réalisation, ledit programme de gestion de production 14 est destiné à réaliser automatiquement, éventuellement sur simple ordre d'un utilisateur U, lesdites premières informations et/ou ladite base de données 13 comprenant ces dernières, lesdites premières informations incluant notamment lesdites données de marquage et/ou lesdites données de configuration, ledit programme de gestion 12 étant destiné à traduire lesdites premières informations (et plus particulièrement lesdites données) en tant qu'instructions machine puis à les transmettre auxdites machines de marquage 2 via ledit réseau 7 et lesdites connexions sans fil 8.

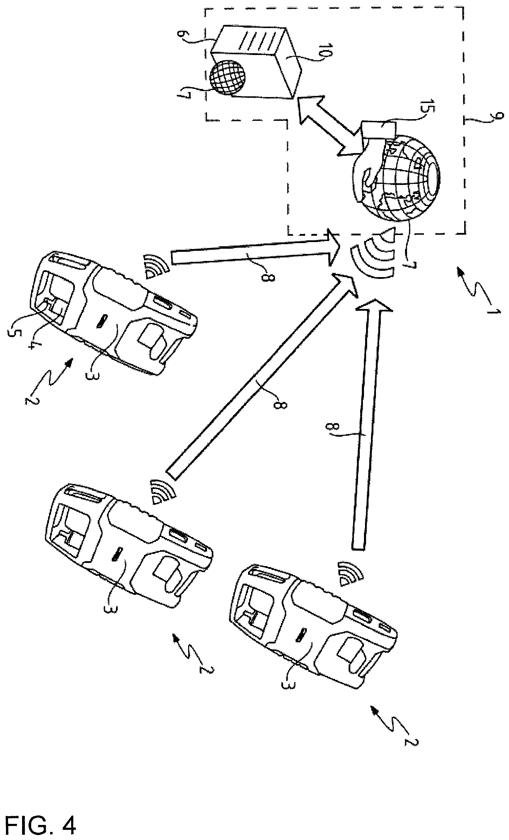

Selon un quatrième mode de réalisation, compatible avec les précédents modes de réalisation, ledit système de marquage 1 comprend un serveur dédié 15, ledit serveur d'entreprise 10 étant conçu pour passer par ledit serveur dédié 15 afin de traiter et/ou de transmettre lesdites premières informations et/ou lesdites secondes informations. En particulier, ledit serveur d'entreprise 10 et/ou ledit serveur dédié 15 est/sont conçu(s) pour utiliser le protocole MQTT afin de traiter et/ou de transmettre lesdites premières informations et/ou lesdites secondes informations. Par exemple, le serveur d'entreprise 10 passe par ledit serveur dédié 15, optionnellement à l'aide d'un protocole du type MQTT, pour transmettre lesdites premières et/ou secondes informations à un élément distant de ladite infrastructure 6, une source tierce, un serveur tiers, etc. ou simplement pour filtrer lesdites premières et/ou secondes informations, lesdites informations étant par exemple destinées à un client. Le serveur dédié 15 présente avantageusement pour fonction de mettre à disposition, de préférence à un public choisi, lesdites premières et/ou secondes informations passant par ledit serveur d'entreprise 10. Le serveur d'entreprise 10 est donc avantageusement conçu pour utiliser un protocole de type MQTT ou tout autre type de protocole approprié ou pour passer par un serveur dédié 15 utilisant un protocole type MQTT ou tout autre type de protocole approprié, afin de traiter et/ou de transmettre lesdites premières informations et/ou lesdites secondes informations. Le serveur dédié 15 dans la configuration mentionnée ci-avant peut notamment servir d'intermédiaire entre le serveur d'entreprise 10 et un tiers externe ayant des droits d'accès aux premières et/ou secondes informations passant par ledit serveur d'entreprise 10, ou encore permettre un filtrage ou un affichage desdites premières et/ou secondes informations ou toute autre utilisation envisageable de ces informations. Une telle configuration, telle qu'illustrée à la figure 4, est particulièrement avantageuse dans le cadre de l'internet des objets, chaque machine de marquage 2 étant par exemple conçue pour être connectée via ladite connexion sans fil 8 respective au serveur d'entreprise 10 ou dédié 15 utilisant par exemple le protocole MQTT pour fournir audit serveur 10, 15 lesdites secondes informations, par exemple un rapport d'état spécifique pour chacune desdites machines de marquage 2, permettant à un utilisateur U et/ou un programme (par exemple ledit programme de gestion de production 14) de connaître en temps réel l'état de fonctionnement de chaque machine de marquage 2, par exemple sa température, son niveau de sa batterie le cas échéant, sa vitesse de marquage, d'éventuels problèmes mécaniques, voire sa position, etc. Le serveur d'entreprise 10 ou dédié 15 utilisant par exemple le protocole MQTT (ou tout autre protocole approprié) permet ainsi avantageusement de réaliser une fiche de suivi (formée en particulier par lesdites secondes informations) de chaque machine de marquage 2 connectée audit réseau 7. Dans ce quatrième mode de réalisation, ou même dans les précédents, il est tout à fait possible, comme illustré à la figure 4, que ledit dispositif de gestion centralisée de marquage 9 soit intégré au sein du serveur d'entreprise 10 et/ou du serveur dédié 15, et que ledit réseau informatique 7 soit formé en tout ou en partie par le réseau internet ou un réseau intranet d'entreprise.

Selon un mode de réalisation non illustré, ledit système de marquage 1 comprend un premier moyen RFID respectif équipant chaque machine de marquage 2, et un second moyen RFID respectif équipant un dispositif distinct respectif de ladite machine de marquage 2 (ledit dispositif distinct pouvant éventuellement être amovible relativement à ladite machine 2), ladite connexion sans fil 8 respective étant configurée grâce à une reconnaissance RFID entre lesdits premier et second moyens RFID, c'est-à-dire un appairage entre lesdites premier et second moyens RFID, ou encore une lecture d'un desdits premier et second moyens RFID par l'autre.

De préférence, le terme Wi-Fi^{™} désigne ici des protocoles de communication sans fil régis par les normes du groupe IEEE 802.11 (IEEE désignant en particulier l'Institut des ingénieurs électriciens et électroniciens).

### POSSIBILITE D'APPLICATION INDUSTRIELLE

Le système 1 et le procédé de marquage de l'invention sont particulièrement adaptés pour réaliser, à l'aide de plusieurs machines de marquage distinctes, le marquage par micropercussion d'un nombre important de composants industriels, pour assurer leur identification et/ou leur suivi, tout en minimisant le risque d'erreur, de doublons non-voulus, et/ou de mauvaise manipulation par un opérateur.

## Revendications

1. - Système de marquage (1) **caractérisé en ce qu'**il comprend :
- une pluralité de machines de marquage par micropercussion (2) chacune équipée d'un dispositif de liaison sans fil (3) respectif,
- une infrastructure (6) de réseau informatique (7) conçue pour générer une zone de connexion sans fil, dans laquelle lesdites machines de marquage (2) peuvent être positionnées afin que leurs dispositifs de liaison sans fil (3) respectifs coopèrent avec ladite infrastructure de manière à établir une connexion sans fil (8) respective entre chacune desdites machines de marquage (2) et ledit réseau (7),
- un dispositif de gestion centralisée de marquage (9) relié à ladite infrastructure (6) de réseau (7) et destiné, via ledit réseau (7) et lesdites connexions sans fil (8), à fournir auxdites machines de marquage (2) des premières informations et/ou à recevoir desdites machines de marquage (2) des secondes informations.

2. - Système de marquage (1) selon la revendication précédente, **caractérisé en ce que** ladite infrastructure (6) de réseau (7) comprend au moins une borne de connexion sans fil destinée à se connecter avec au moins l'un desdits dispositifs de liaison sans fil (3) pour établir ladite connexion sans fil (8), au moins une partie de ladite zone se situant autour de ladite borne.

3. - Système de marquage (1) selon la revendication 1 ou 2, **caractérisé en ce que** ladite infrastructure (6) de réseau (7) comprend au moins un serveur d'entreprise (10) par lequel passent et/ou sont traitées lesdites premières informations et/ou lesdites secondes informations.

4. - Système de marquage (1) selon l'une des revendications précédentes, **caractérisé en ce que** ledit dispositif de gestion centralisée de marquage (9) comprend en outre au moins une base de données (13) comprenant au moins en partie lesdites premières informations et/ou enregistrant au moins en partie lesdites secondes informations.

5. - Système de marquage (1) selon l'une des revendications précédentes, **caractérisé en ce que** ladite connexion sans fil (8) est une connexion radio, par exemple de type Wi-Fi^{™}, ledit dispositif de connexion sans fil (3) étant donc conçu pour se connecter via liaison radio audit réseau (7).

6. - Système de marquage (1) selon l'une des revendications précédentes, **caractérisé en ce que** lesdites secondes informations sont des rapports d'état distincts de chacune desdites machines de marquage (2).

7. - Système de marquage (1) selon la revendication précédente, **caractérisé en ce que** l'un ou plusieurs desdits rapports d'état comprend :
- un nombre de cycles de marquage respectif effectué par l'une ou plusieurs desdites machines de marquage (2),
- et/ou une température de fonctionnement respective de l'une ou plusieurs desdites machines de marquage (2).

8. - Système de marquage (1) selon l'une des revendications précédentes, **caractérisé en ce qu'**une ou plusieurs desdites machines de marquage (2) est/sont portative(s).

9. - Système de marquage (1) selon la revendication précédente, **caractérisé en ce qu'**une ou plusieurs desdites machine(s) de marquage (2) portative(s) est/sont munie(s) chacune d'une batterie respective garantissant son/leur autonomie, l'un ou plusieurs desdits rapports d'état comprenant des données relatives au niveau de chargement de chaque batterie.

10. - Système de marquage (1) selon l'une des revendications précédentes, **caractérisé en ce que** lesdites premières informations comprennent des instructions de marquage distinctes pour chacune desdites machines de marquage (2).

11. - Système de marquage (1) selon l'une des revendications précédentes, **caractérisé en ce que** ledit dispositif de gestion centralisée de marquage (9) comprend une interface utilisateur (11) conçue pour permettre à un utilisateur (U) de rentrer manuellement lesdites premières informations et/ou lire lesdites secondes informations.

12. - Système de marquage (1) selon l'une des revendications précédentes, **caractérisé en ce que** ledit dispositif de gestion centralisée de marquage (9) comprend un programme de gestion de production (14) destiné à fournir automatiquement lesdites premières informations.

13. - Système de marquage (1) selon l'une des revendications précédentes, **caractérisé en ce que** lesdites premières informations comprennent des données de configuration desdites machines de marquage (2).

14. - Système de marquage (1) selon l'une des revendications précédentes, **caractérisé en ce que** chaque machine de marquage (2) comprend une tête de marquage respective (4) munie d'un poinçon mobile (5) respectif, lequel est destiné à percuter une pièce à marquer respective de manière à déformer cette dernière pour y inscrire au moins un signe respectif, ledit signe respectif étant issu desdites premières informations.

15. - Procédé de marquage comprenant :
- une étape de génération d'une zone de connexion sans fil,
- une étape de positionnement dans ladite zone de connexion sans fil d'une pluralité de machines de marquage par micropercussion (2) chacune équipée d'un dispositif de liaison sans fil (3) respectif,
- une étape de connexion dans laquelle chaque dispositif de liaison sans fil (3) établit une connexion sans fil (8) respective entre chacune desdites machines de marquage (2) et un réseau informatique (7),
- une étape de transmission, dans laquelle un dispositif de gestion centralisée de marquage (9), via ledit réseau (7) et lesdites connexions sans fil (8), fournit auxdites machines de marquage (2) des premières informations et/ou reçoit desdites machines de marquage (2) des secondes informations.

## Patentansprüche

1. - Markierungssystem (1), **dadurch gekennzeichnet, dass** es umfasst:
- eine Vielzahl von Mikroperkussions-Markierungsmaschinen (2), die jeweils mit einer entsprechenden drahtlosen Verbindungsvorrichtung (3) ausgestattet sind,
- eine Infrastruktur (6) eines Computernetzwerks (7), die so ausgelegt ist, dass sie einen drahtlosen Verbindungsbereich erzeugt, in dem die Markierungsmaschinen (2) so positioniert werden können, dass ihre jeweiligen drahtlosen Verbindungsvorrichtungen (3) mit der Infrastruktur zusammenarbeiten, um eine jeweilige drahtlose Verbindung (8) zwischen jeder der Markierungsmaschinen (2) und dem Netzwerk (7) herzustellen,
- eine zentrale Markierungsverwaltungsvorrichtung (9), die mit der Infrastruktur (6) des Netzwerks (7) verbunden ist und über das Netzwerk (7) und die drahtlosen Verbindungen (8) dazu bestimmt ist, den Markierungsmaschinen (2) erste Informationen zu liefern und/oder von den Markierungsmaschinen (2) zweite Informationen zu empfangen.

2. - Markierungssystem (1) nach dem vorhergehenden Anspruch, **dadurch gekennzeichnet, dass** die Infrastruktur (6) des Netzwerks (7) mindestens einen drahtlosen Verbindungsanschluss zur Verbindung mit mindestens einer der drahtlosen Verbindungsvorrichtungen (3) umfasst, um die drahtlose Verbindung (8) herzustellen, wobei sich mindestens ein Teil des Bereichs um den Anschluss herum befindet.

3. - Markierungssystem (1) nach Anspruch 1 oder 2, **dadurch gekennzeichnet, dass** die Infrastruktur (6) des Netzwerks (7) mindestens einen Unternehmensserver (10) umfasst, durch den die ersten Informationen und/oder die zweiten Informationen laufen und/oder verarbeitet werden.

4. - Markierungssystem (1) nach einem der vorhergehenden Ansprüche, **dadurch gekennzeichnet, dass** die zentrale Markierungsverwaltungsvorrichtung (9) außerdem mindestens eine Datenbank (13) umfasst, die zumindest teilweise die ersten Informationen umfasst und/oder zumindest teilweise die zweiten Informationen speichert.

5. - Markierungssystem (1) nach einem der vorhergehenden Ansprüche, **dadurch gekennzeichnet, dass** die drahtlose Verbindung (8) eine Funkverbindung ist, z. B. vom Typ Wi-Fi^{™}, wobei die drahtlose Verbindungsvorrichtung (3) daher so ausgelegt ist, dass sie sich über eine Funkverbindung mit dem Netzwerk (7) verbindet.

6. - Markierungssystem (1) nach einem der vorhergehenden Ansprüche, **dadurch gekennzeichnet, dass** die zweiten Informationen separate Statusberichte von jeder der Markierungsmaschinen (2) sind.

7. - Markierungssystem (1) nach dem vorhergehenden Anspruch, **dadurch gekennzeichnet, dass** einer oder mehrere der Statusberichte umfasst:
- eine jeweilige Anzahl von Markierungszyklen, die von einer oder mehreren der genannten Markierungsmaschinen (2) durchgeführt werden,
- und/oder eine jeweilige Betriebstemperatur einer oder mehrerer der genannten Markierungsmaschinen (2).

8. - Markierungssystem (1) nach einem der vorhergehenden Ansprüche, **dadurch gekennzeichnet, dass** eine oder mehrere der Markierungsmaschinen (2) tragbar ist/sind.

9. - Markierungssystem (1) nach dem vorhergehenden Anspruch, **dadurch gekennzeichnet, dass** eine oder mehrere der tragbaren Markierungsmaschine(n) (2) jeweils mit einer entsprechenden Batterie ausgestattet ist/sind, die ihre Autonomie gewährleistet, wobei einer oder mehrere der Statusberichte Daten über den Ladezustand jeder Batterie enthält/enthalten.

10. - Markierungssystem (1) nach einem der vorhergehenden Ansprüche, **dadurch gekennzeichnet, dass** die ersten Informationen separate Markierungsanweisungen für jede der Markierungsmaschinen (2) umfassen.

11. - Markierungssystem (1) nach einem der vorhergehenden Ansprüche, **dadurch gekennzeichnet, dass** die zentrale Markierungsverwaltungsvorrichtung (9) eine Benutzerschnittstelle (11) umfasst, die so gestaltet ist, dass sie einem Benutzer (U) ermöglicht, die ersten Informationen manuell einzugeben und/oder die zweiten Informationen zu lesen.

12. - Markierungssystem (1) nach einem der vorhergehenden Ansprüche, **dadurch gekennzeichnet, dass** die zentrale Markierungsverwaltungsvorrichtung (9) ein Produktionsverwaltungsprogramm (14) zur automatischen Bereitstellung der ersten Informationen umfasst.

13. - Markierungssystem (1) nach einem der vorhergehenden Ansprüche, **dadurch gekennzeichnet, dass** die ersten Informationen Daten zur Konfiguration der Markierungsmaschinen (2) umfassen.

14. - Markierungssystem (1) nach einem der vorhergehenden Ansprüche, **dadurch gekennzeichnet, dass** jede Markierungsmaschine (2) einen jeweiligen Markierungskopf (4) umfasst, der mit einem jeweiligen beweglichen Stempel (5) versehen ist, der dazu bestimmt ist, auf ein jeweiliges zu markierendes Teil zu schlagen, um dieses zu verformen, um mindestens ein jeweiliges Zeichen einzuschreiben, wobei das jeweilige Zeichen aus den ersten Informationen abgeleitet ist.

15. - Markierungsverfahren, das Folgendes umfasst:
- einen Schritt zum Erzeugen eines drahtlosen Verbindungsbereichs,
- einen Schritt des Positionierens einer Vielzahl von Mikroperkussions-Markierungsmaschinen (2), die jeweils mit einer entsprechenden drahtlosen Verbindungsvorrichtung (3) ausgestattet sind, in dem drahtlosen Verbindungsbereich,
- einen Verbindungsschritt, bei dem jede drahtlose Verbindungsvorrichtung (3) eine jeweilige drahtlose Verbindung (8) zwischen jeder der Markierungsmaschinen (2) und einem Computernetzwerk (7) herstellt,
- einen Übertragungsschritt, bei dem eine zentrale Markierungsverwaltungsvorrichtung (9) über das Netzwerk (7) und die drahtlosen Verbindungen (8) den Markierungsmaschinen (2) erste Informationen liefert und/oder von den Markierungsmaschinen (2) zweite Informationen empfängt.

## Claims

1. A marking system (1) **characterized in that** it comprises:
- a plurality of micro-percussion marking machines (2) each equipped with a respective wireless link device (3),
- a computer network (7) infrastructure (6) designed to generate a wireless connection area, in which said marking machines (2) can be positioned so that their respective wireless link devices (3) cooperate with said infrastructure so as to establish a respective wireless connection (8) between each of said marking machines (2) and said network (7),
- a centralized marking management device (9) connected to said network (7) infrastructure (6) and intended, via said network (7) and said wireless connections (8), to supply said marking machines (2) with first information and/or to receive second information from said marking machines (2).

2. The marking system (1) according to the preceding claim, **characterized in that** said network (7) infrastructure (6) comprises at least one wireless connection terminal intended to be connected with at least one of said wireless link devices (3) to establish said wireless connection (8), at least part of said area being around said terminal.

3. The marking system (1) according to claim 1 or 2, **characterized in that** said network (7) infrastructure (6) comprises at least one business server (10) through which pass and/or are processed said first information and/or said second information.

4. The marking system (1) according to any of the preceding claims, **characterized in that** said centralized marking management device (9) further comprises at least one database (13) comprising at least part of said first information and/or at least partially recording said second information.

5. The marking system (1) according to any of the preceding claims, **characterized in that** said wireless connection (8) is a radio connection, for example of the Wi-Fi^{™} type, said wireless connection device (3) therefore being designed to connect via radio link to said network (7).

6. The marking system (1) according to any of the preceding claims, **characterized in that** said second information is separate status reports of each of said marking machines (2).

7. The marking system (1) according to the preceding claim, **characterized in that** one or more of said status reports comprises:
- a number of respective marking cycles performed by one or more of said marking machines (2),
- and/or a respective operating temperature of one or more of said marking machines (2).

8. The marking system (1) according to any of the preceding claims, **characterized in that** one or more of said marking machines (2) is/are portable(s).

9. The marking system (1) according to the preceding claim, **characterized in that** one or more of said portable marking machine(s) (2) is/are each provided with a respective battery ensuring its/their autonomy, one or more of said status reports comprising data relating to the charge level of each battery.

10. The marking system (1) according to any of the preceding claims, **characterized in that** said first information comprises separate marking instructions for each of said marking machines (2).

11. The marking system (1) according to any of the preceding claims, **characterized in that** said centralized marking management device (9) comprises a user interface (11) designed to allow a user (U) to manually enter said first information and/or read said second information.

12. The marking system (1) according to any of the preceding claims, **characterized in that** said centralized marking management device (9) comprises a production management program (14) intended to automatically provide said first information.

13. The marking system (1) according to any of the preceding claims, **characterized in that** said first information comprises configuration data of said marking machines (2).

14. The marking system (1) according to any of the preceding claims, **characterized in that** each marking machine (2) comprises a respective marking head (4) provided with a respective movable punch (5), which is intended to impact a respective part to be marked so as to deform the latter in order to register at least one respective sign therein, said respective sign coming from said first information.

15. A marking method comprising:
- a step of generating a wireless connection zone,
- a positioning step in said wireless connection area of a plurality of micro-percussion marking machines (2) each equipped with a respective wireless link device (3),
- a connection step in which each wireless link device (3) establishes a respective wireless connection (8) between each of said marking machines (2) and a computer network (7),
- a transmission step, in which a centralized marking management device (9), via said network (7) and said wireless connections (8), provides said marking machines (2) with first information and/or receives second information from said marking machines (2).
